# EUROPÄISCHE PATENTANMELDUNG

(11) **EP 0 649 769 A1**
(43) Veröffentlichungstag der Anmeldung: **26.04.1995**
(21) Anmeldenummer: 94115417.1
(22) Anmeldetag: 30.09.1994
(51) Int. Cl.: B60L 11/18, B60L 9/00, B60L 1/00, B60L 11/12

(54) **Antriebseinrichtung für ein Verkehrsmittel**

(30) Priorität: 20.10.1993 DE 4335849
(71) Anmelder: J.M. Voith GmbH, D-89522 Heidenheim (DE)
(72) Erfinder: Wüst, Bernhard, Dr., D-89555 Steinheim (DE)
(74) Vertreter: Weitzel, Wolfgang, Dr.-Ing. Patentanwalt

(57) **Zusammenfassung**

Es wird eine Antriebseinrichtung für ein Verkehrsmittel angegeben. Es sind folgende Baugruppen vorgesehen: eine an eine elektrische Stromversorgung (23) anschließbare Anschlußeinrichtung (22), die mit einem Stromrichter (21) verbunden ist; ein erstes Antriebsaggregat in Form eines Elektro-Antriebsmotors (20), der an den Stromrichter (21) angeschlossen ist; ein zweites Antriebsaggregat in Form eines Verbrennungsmotors (2); ein Generator (3), der mit dem Verbrennungsmotor (2) und über den Stromrichter (21) mit dem Elektro-Antriebsmotor (20) verbunden ist; und diverse Nebenaggregate. Der Generator (3) ist mechanisch ständig mit den jeweiligen Nebenaggregaten (10, 11, 12) verbunden, während der Verbrennungsmotor (2) in schaltbarer Weise sowohl an die Nebenaggregate als auch den Generator (3) anschließbar ist. Dabei ist einerseits bei Betrieb des Elektro-Antriebsmotors (20) über die externe elektrische Stromversorgung (23) der Generator (3) vom Verbrennungsmotor (2) getrennt und der von der Stromversorgung (23) versorgte Generator (3) wird als Elektromotor betrieben und treibt die Nebenaggregate (10, 11, 12) an. Andererseits ist bei Betrieb des Elektro-Antriebsmotors (20) über den Verbrennungsmotor (2) der Verbrennungsmotor (2) so ausgelegt, daß er den Generator (3) und die Nebenaggregate (10, 11, 12) antreibt.

## Beschreibung

Die Erfindung betrifft eine Antriebseinrichtung für ein Verkehrsmittel, insbesondere einen Oberleitungsbus oder ein Schienenfahrzeug, mit einer an eine externe elektrische Stromversorgung anschließbaren elektrischen Anschlußeinrichtung, die mit einem Stromrichter verbunden ist; mit einem ersten Antriebsaggregat in Form eines Elektro-Antriebsmotors, der an den Stromrichter angeschlossen ist; mit einem zweiten Antriebsaggregat in Form eines Verbrennungsmotors; mit einem Generator, der einerseits mit dem Verbrennungsmotor und andererseits über den Stromrichter mit dem Elektro-Antriebsmotor verbunden ist; und mit mindestens einem Nebenaggregat für das Verkehrsmittel.

Derartige Antriebseinrichtungen sind hinlänglich bekannt und werden beispielsweise bei Bussen, insbesondere Trolley-Bussen oder Duo-Bussen, verwendet; sie könnten in entsprechender Weise aber auch bei Schienenfahrzeugen zum Einsatz gelangen. Solche Antriebseinrichtungen bieten den Vorteil, daß im Normalbetrieb der Antrieb des Verkehrsmittels über den Elektro-Antriebsmotor erfolgt. Damit wird insbesondere im Stadtverkehr, also in dicht besiedelten Gebieten, die Emission von Abgasen und Schadstoffen vermieden.

Der zusätzlich vorgesehene Verbrennungsmotor dient dazu, einerseits den Aktionsradius von solchen Verkehrsmitteln zu vergrößern, da beispielsweise das Oberleitungsnetz häufig nur im zentralen Stadtbereich ausgebaut ist und daher in Stadtrandbereichen oder auf Nebenstrecken (Umleitungen) ein weiteres Antriebsaggregat erforderlich ist.

Andererseits können solche Verbrennungsmotoren als zweites Antriebsaggregat eingesetzt werden, um das Verkehrsmittel anzutreiben, wenn Störungen im externen elektrischen Stromversorgungsnetz auftreten, damit der Verkehrsbetrieb ungestört aufrechterhalten werden kann.

Bei herkömmlichen Bussen, sowohl Stadtbussen als auch Überlandbussen, ist eine Reihe von zusätzlichen Nebenaggregaten erforderlich, beispielsweise eine Wasserpumpe, ein Luftkompressor, eine Servohilfspumpe für die Servolenkung. Diese Nebenaggregate werden vom Verbrennungsmotor über einen oder mehrere Keilriemen angetrieben, wobei die Verbrennungsmotoren von solchen herkömmlichen Bussen für diese zusätzlichen Leistungen ausgelegt sind und der erforderliche Bauraum für diese Nebenaggregate zur Verfügung steht.

Bei Oberleitungsbussen ist aber ein solcher direkter Antrieb der Nebenaggregate vom Verbrennungsmotor in der Regel nicht möglich. Es ergibt sich das Problem, daß die an den Verbrennungsmotor angeschlossenen Nebenaggregate nicht mehr angetrieben werden, wenn, beispielsweise im Stadtbetrieb, der Antrieb ausschließlich elektrisch erfolgt, also von der externen elektrischen Stromversorgung über den Elektro-Antriebsmotor.

Bei kombinierten Antriebseinrichtungen der eingangs genannten Art ist man daher dazu übergegangen, ein separates Gleichstrom-Bordnetz, beispielsweise mit 24 Volt Gleichspannung, an Bord eines Oberleitungsbusses zu installieren, wobei dieses Bordnetz über geeignete Umformer an die externe elektrische Stromversorgung anschließbar ist. An dieses Bordnetz ist dann eine Reihe von separaten Elektromotoren angeschlossen, die jeweils eines der Nebenaggregate separat antreiben. Erfolgt der Antrieb des Verkehrsmittels, z.B. bei Störung der externen elektrischen Stromversorgung, durch den Verbrennungsmotor, so treibt der Verbrennungsmotor auch ein Notstromaggregat, welches das Bordnetz mit elektrischer Energie versorgt.

Es erscheint einsichtig, daß eine derartige Konzeption einer Antriebseinrichtung mit einer Vielzahl von parallelen und separaten Nebenaggregaten mit eigenen Elektromotoren und dazugehörigen Steuerungen sehr aufwendig und kompliziert ist und darüberhinaus erheblichen Bauraum erfordert. Abgesehen von den beträchtlichen Kosten durch die Vielzahl von Elektromotoren und Steuerungen ist ein weiterer Nachteil in dem schlechten Gesamtwirkungsgrad der Anordnung mit diesen zusätzlichen elektrischen Antriebseinrichtungen zu sehen.

Der Erfindung liegt daher die Aufgabe zugrunde, eine Antriebseinrichtung der eingangs genannten Art anzugeben, die eine vereinfachte Bauform der Nebenaggregate mit ihren Antrieben sowie eine Unterbringung dieser Nebenaggregate mit kleinerem Bauraum ermöglicht, ohne daß die Zuverlässigkeit dieser Komponenten beeinträchtigt wird.

Die erfindungsgemäße Lösung besteht darin, eine Antriebseinrichtung der eingangs genannten Art so auszubilden, daß der Generator mechanisch ständig mit den jeweiligen Nebenaggregaten verbunden ist, während der Verbrennungsmotor in schaltbarer Weise sowohl an diese Nebenaggregate als auch an den Generator anschließbar ist, derart, daß einerseits bei Betrieb des Elektro-Antriebsmotors über die externe elektrische Stromversorgung der Generator vom Verbrennungsmotor getrennt ist und der von der externen elektrischen Stromversorgung versorgte Generator als Elektromotor betrieben wird und die Nebenaggregate antreibt, und daß andererseits bei Betrieb des Elektro-Antriebsmotors über den Verbrennungsmotor der Verbrennungsmotor sowohl den Generator als auch die Nebenaggregate antreibt.

Auf diese Weise wird die Aufgabe in zufriedenstellender Weise gelöst. Dabei wird in vorteilhafter Weise erreicht, daß keine separaten Elektromotoren mit ihren zugehörigen Steuerungen für die jeweiligen Nebenaggregate erforderlich sind. Dadurch werden einerseits die Kosten gesenkt, andererseits wird der erforderliche Bauraum reduziert.

Da der Stromrichter für den Elektro-Antriebsmotor mit der dazugehörigen Leistungselektronik ohnehin vorhanden ist, wird diese Baugruppe zum Antrieb sämtlicher Nebenaggregate genutzt, ohne daß zusätzliche Baugruppen erforderlich sind.

In Weiterbildung der erfindungsgemäßen Antriebseinrichtung ist vorgesehen, daß die schaltbare Verbindung zwischen dem Verbrennungsmotor einerseits und den jeweiligen Nebenaggregaten andererseits eine einrückbare Schaltkupplung aufweist. Es ist somit auf mechanischem Wege möglich, die jeweiligen Nebenaggregate an den Verbrennungsmotor als Antriebsaggregat anzuschließen.

In Weiterbildung der erfindungsgemäßen Antriebseinrichtung ist vorgesehen, daß zwischen dem Verbrennungsmotor, dem Generator und den jeweiligen Nebenaggregaten ein Verteilergetriebe als mechanische Verbindung vorgesehen ist. Auf diese Weise wird für eine geeignete mechanische Verbindung gesorgt, die den Erfordernissen der jeweiligen Nebenaggregate Rechnung trägt.

Insbesondere ist bei der erfindungsgemäßen Antriebseinrichtung vorgesehen, daß mit dem Generator und wahlweise mit dem Verbrennungsmotor mehrere Nebenaggregate gleichzeitig verbunden sind.

Während der Verbrennungsmotor, wie bei einer Vielzahl von Verkehrsmitteln üblich, als Dieselmotor ausgebildet sein kann, ist es bei der erfindungsgemäßen Antriebseinrichtung zweckmäßig, wenn sowohl der Generator als auch der Elektro-Antriebsmotor als Transversalflußmaschinen ausgebildet sind. Dabei kann in vorteilhafter Weise der hohe Wirkungsgrad von Transversalflußmaschinen von 90 % bis 95 % ausgenutzt werden. Solche Transversalflußmaschinen sind an sich bekannt und z.B. in der DE 39 27 453 C2 beschrieben.

Bei der erfindungsgemäßen Antriebseinrichtung sind zweckmäßigerweise der Verbrennungsmotor einerseits und der Generator andererseits Bestandteile eines Notstromaggregats bzw. einer alternativen oder zusätzlichen Stromversorgung für den Elektro-Antriebsmotor. Diese Konzeption ermöglicht es, daß in jedem Falle ein Antrieb der Nebenaggregate sichergestellt ist, unabhängig davon, ob Störungen oder gar ein Ausfall der externen elektrischen Stromversorgung auftreten.

In Weiterbildung der erfindungsgemäßen Antriebseinrichtung ist vorgesehen, daß der Generator und der Elektro-Antriebsmotor über den Stromrichter an eine Oberleitung oder eine Stromschiene als elektrische Stromversorgung anschließbar sind.

Bei einer speziellen Bauform der erfindungsgemäßen Antriebseinrichtung weisen die Nebenaggregate eine Lenkhilfspumpe, einen Luftkompressor, einen Bordspannungsgenerator und/oder eine Wasserpumpe auf. Es können jedoch selbstverständlich auch weitere oder andere Nebenaggregate vorgesehen sein, beispielsweise Heizaggregate oder Kühlaggregate.

In Weiterbildung der erfindungsgemäßen Antriebseinrichtung ist vorgesehen, daß der Generator als Anlasser für den Verbrennungsmotor betreibbar ist. Auf diese Weise wird ein schonendes, aber zugleich zuverlässiges Starten des Verbrennungsmotors gewährleistet. Das Anlassen erfolgt nämlich mit hoher Drehzahl, so daß ein deutlich verringerter Partikelausstoß bei Dieselmotoren auftritt.

Zusätzlich zu den bereits beschriebenen Vorteilen wird noch eine Reihe von weiteren Vorteilen erreicht. Beispielsweise kann der Gesamtwirkungsgrad gesteigert werden, da das Bordnetz bei der erfindungsgemäßen Antriebseinrichtung einen besonders hohen Wirkungsgrad hat. Dabei können einerseits ein Bordnetzumformer zwischen der externen elektrischen Stromversorgung und dem Bordnetz sowie die dazugehörigen Elektromotoren entfallen, die sonst relativ hohe elektrische Verluste mit sich bringen. Andererseits kann der Leistungsbedarf aus diesem Bordnetz verringert werden, was sich in geringerem Platzbedarf und geringeren Kosten für dieses Bordnetz auswirkt.

Da der Bordspannungsgenerator als Nebenaggregat entweder über den Generator oder den Verbrennungsmotor angetrieben wird, kann der Bordnetzumformer entfallen, was weiteren Bauraum einspart. Zugleich wird der Aufwand für die Isolation des Bordnetzes verringert, da keine Schutzisolierung (doppelte Isolation) gegenüber der externen elektrischen Stromversorgung mehr erforderlich ist, denn in einem etwaigen Schadensfall kann keine galvanische Verbindung zu der externen elektrischen Stromversorgung, beispielsweise einer Oberleitung, auftreten.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Die Zeichnungen zeigen in
- Fig. 1: eine schematische Darstellung der erfindungsgemäßen Antriebseinrichtung in Form eines Blockdiagramms in einer ersten Betriebsart;
- Fig. 2: eine schematische Darstellung der Antriebseinrichtung in einer zweiten Betriebsart; und in
- Fig. 3: eine schematische Darstellung zur Erläuterung des Aufbaus eines Verteilergetriebes mit einrückbarer Schaltkupplung für die Verbindung mit entsprechenden Nebenaggregaten.

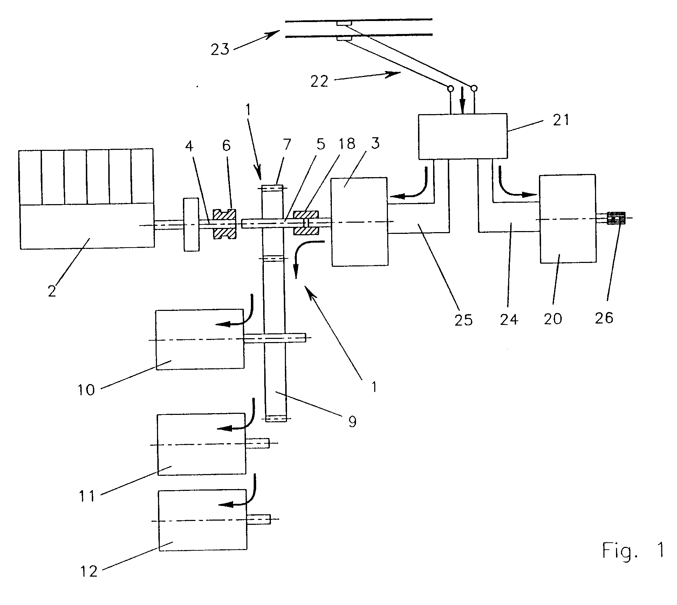

Fig. 1 zeigt schematisch eine erste Betriebsart einer beispielhaften Ausführungsform der Antriebseinrichtung, bei der ein nicht dargestelltes Fahrzeug, beispielsweise ein Oberleitungsbus, von einem Elektro-Antriebsmotor 20 über ein schematisch angedeutetes Antriebsritzel 26 angetrieben wird.

In dieser ersten Betriebsart ist der Elektro-Antriebsmotor 20 über eine schematisch angedeutete Leitung 24 an einen Stromrichter 21 angeschlossen, der zweckmäßigerweise als Wechselrichter ausgelegt ist. Dieser Stromrichter 21 ist über eine elektrische Anschlußeinrichtung 22, beispielsweise ausfahrbare Stromabnehmer am Dach eines Oberleitungsbusses, an eine Oberleitung als externe elektrische Stromversorgung 23 anschließbar, die ebenfalls nur schematisch angedeutet ist.

Weiterhin ist der Stromrichter 21 über eine weitere Leitung 25 mit einem Generator 3 verbunden, bei dem es sich zweckmäßigerweise um eine Transversalflußmaschine handelt, die wahlweise als Generator oder als Elektromotor betreibbar ist. Weiterhin ist es zweckmäßig, wenn der Generator 3 so ausgelegt ist, daß er über eine nicht dargestellte Steuerung als Anlasser für einen Verbrennungsmotor 2 betrieben werden kann.

Zwischen dem Generator 3 und dem Verbrennungsmotor 2, der zweckmäßigerweise als Dieselmotor ausgebildet ist, erkennt man ein Verteilergetriebe 1, das eine mit dem Verbrennungsmotor 2 verbundene erste Welle 4 und eine mit dem Generator 3 verbundene zweite Welle 5 aufweist. Auf der Welle 5 sitzt mindestens ein Zahnrad 7, das mit einem weiteren Zahnrad 9 in Eingriff steht, um ein Drehmoment auf das entsprechende Nebenaggregat 10 zu übertragen.

In Fig. 1 sind noch weitere Nebenaggregate 11 und 12 angedeutet, die in entsprechender Weise an die Welle 5 anschließbar sind, und zwar entweder über entsprechende weitere Zahnräder 7 auf der Welle 5 mit nicht dargestellten Zahnrädern, die dem Zahnrad 9 entsprechen; oder aber über entsprechende Zahnräder, die mit dem Zahnrad 9 oder dem Zahnrad 7 in Eingriff stehen.

Das Verteilergetriebe 1 weist zwischen den Wellen 4 und 5 eine einrückbare Schaltkupplung 6 auf, die in Fig. 1 nur schematisch angedeutet ist, und zwar in Fig. 1 im ausgerückten Zustand.

Der Leistungsfluß ist in Fig. 1 mit Pfeilen schematisch angedeutet. Man erkennt, daß die Energiezufuhr primär von der externen elektrischen Stromversorgung 23 über die elektrische Anschlußeinrichtung 22 zum Stromrichter 21 erfolgt. Von dort wird in einem erste Zweig der Elektro-Antriebsmotor 20 mit Energie versorgt und angetrieben. In einem zweiten Zweig erfolgt die Energiezufuhr über die Leitung 25 zum Generator 3, der in dieser Betriebsart als Antriebsmotor arbeitet und der seinerseits über die Welle 5 die verschiedenen Antriebsaggregate 10, 11 und 12 antreibt. Der Verbrennungsmotor 2 ist bei dieser Betriebsart energetisch nicht angeschlossen.

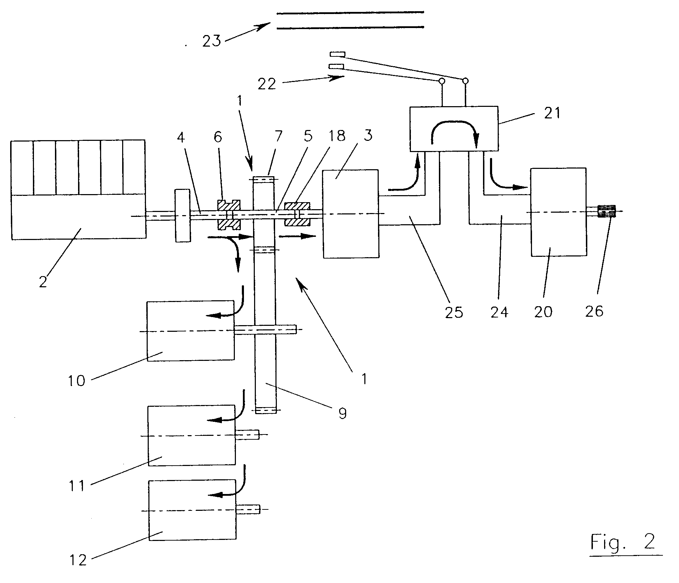

Fig. 2 zeigt eine zweite Betriebsart der Antriebseinrichtung. Man erkennt, daß die elektrische Anschlußeinrichtung 22 von der externen elektrischen Stromversorgung 23 getrennt ist. In diesem Falle ist die einrückbare Schaltkupplung 6 im Verteilergetriebe 1 eingerückt, so daß der Verbrennungsmotor 2 mechanisch sowohl mit den Nebenaggregaten 10, 11 und 12 als auch mit dem Generator 3 verbunden ist.

Auch hier ist der Leistungsfluß mit Pfeilen angedeutet. In einem ersten Zweig treibt der Verbrennungsmotor 2 über die Welle 4, die eingerückte Schaltkupplung 6 und das Zahnrad 7 die Nebenaggregate 10, 11 und 12 an. In einem zweiten Zweig treibt der Verbrennungsmotor 2 über die Welle 4, die eingerückte Schaltkupplung 6 und die weitere Welle 5 den Generator 3 an, der nun die erforderliche elektrische Energie erzeugt, um über die Leitung 25, den Stromrichter 21 und die Leitung 24 den Elektro-Antriebsmotor 20 mit Strom zu versorgen und auf diese Weise anzutreiben.

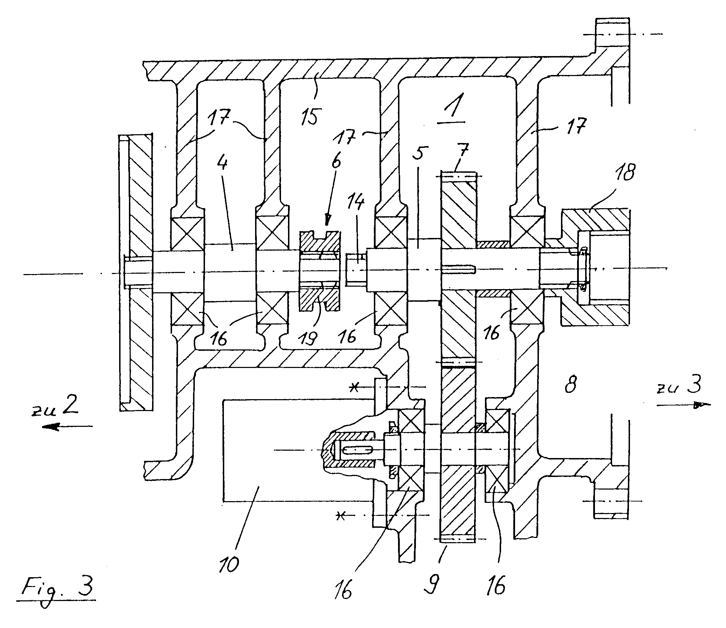

Fig. 3 zeigt Einzelheiten einer möglichen Ausführungsform eines Verteilergetriebes 1, das auf der linken Seite an den Verbrennungsmotor 2 und auf der rechten Seite an den Generator 3 anschließbar ist.

In einem Gehäuse 15 mit einer Vielzahl von Trägern 17 sind über geeignete Lager 16 die erste Welle 4 und die zweite Welle 5 drehbar gelagert, wobei die erste Welle 4 an den in Fig. 3 nicht dargestellten Verbrennungsmotor 2 angeschlossen ist, während die zweite Welle 5 über eine Kupplung 18 an den in Fig. 3 nicht dargestellten Generator 3 angeschlossen ist.

Die Welle 4 ist dabei an ihrem dem Verbrennungsmotor 2 abgewendeten Ende mit der einrückbaren Schaltkupplung 6 versehen, die einen äußeren Ring 19 aufweist, der mit einem Kupplungszapfen 14 der Welle 5 in Eingriff bringbar ist, wenn die Schaltkupplung 6 eingerückt ist.

Auf der Welle 5 sitzt ein erstes Zahnrad 7, das mit einem weiteren Zahnrad 9 auf einer Welle 8 kämmt und dazu dient, das Nebenaggregat 10 anzutreiben. Zu diesem Zweck ist die Welle 8 des Zahnrades 9 in entsprechenden Lagern 16 gelagert, die in schematisch angedeuteten Trägern sitzen.

Die weiteren, in Fig. 1 und 2 schematisch angedeuteten Nebenaggregate 11 und 12 sowie weitere Nebenaggregate sind in entsprechender Weise mechanisch mit der Welle 5 verbunden, wobei entsprechende Zahnräder 9 dieser Nebenaggregate entweder mit dem einen Zahnrad 7 oder mit weiteren Zahnrädern 7 auf der Welle 5 kämmen.

Bei den schematisch angedeuteten Nebenaggregaten 10, 11 und 12 kann es sich insbesondere um eine Lenkhilfspumpe für die Servolenkung des Fahrzeuges, einen Luftpresser (Luftkompressor), einen Bordnetzgenerator, eine Wasserpumpe, eine Heizeinrichtung und eine Kühleinrichtung (Klimakompressor) für das jeweilige Verkehrsmittel handeln. Insofern ist die Anzahl der anschließbaren Nebenaggregate keinesfalls begrenzt und wird in Abhängigkeit von den Erfordernissen der Praxis gewählt.

Es erscheint einsichtig, daß die vorstehend beschriebene Antriebseinrichtung den Erfordernissen der Praxis in vollem Umfang genügt und zugleich eine raumsparende und dennoch zuverlässig arbeitende Antriebseinrichtung darstellt. Unabhängig davon, ob die Energie aus der externen elektrischen Stromversorgung bezogen wird oder nicht, ist ein zuverlässiger Betrieb sämtlicher Antriebsaggregate gewährleistet.

Die Verwendung von Transversalflußmaschinen als Generator 3 und Elektro-Antriebsmotor 20 ermöglicht ein Konzept mit hohem Wirkungsgrad, wobei zugleich eine geringere Anzahl von Baugruppen erzielt wird.

Wenn der Generator 3 mit einem nicht dargestellten Energiespeicher ausgerüstet ist, kann der Generator 3 als Antriebsmotor betrieben werden, um auch bei abgeschalteter externer elektrischer Stromversorgung als Anlasser für den Verbrennungsmotor 2 zu dienen. Auf diese Weise kann ein zusätzlicher Anlasser entfallen.

Auch wenn der Generator 3 über den Stromrichter 21 und die elektrische Anschlußeinrichtung 22 noch an die externe elektrische Stromversorgung 23 angeschlossen ist, kann der Generator 3 als Anlasser für den Verbrennungsmotor 2 arbeiten. Dies kann in Situationen zweckmäßig sein, in denen die Versorgungsspannung in der externen elektrischen Stromversorgung stark schwankt, so daß entschieden wird, den Verbrennungsmotor 2 anzuwerfen. Auch in Situationen, in denen der Randbereich eines Oberleitungsnetzes erreicht wird (Stadtrand), kann die Energie der externen elektrischen Stromversorgung 23 noch genutzt werden, um den Verbrennungsmotor 2 über den Generator 3 anzulassen.

Bei einer anderen, in den Zeichnungen nicht dargestellten Ausführungsform der Erfindung kann die Antriebseinrichtung auch an eine interne elektrische Stromversorgung, beispielsweise einen Akkumulator, angeschlossen werden und im sogenannten Batteriebetrieb fahren. Dies bietet sich z.B. an, wenn das Fahrzeug durch eine Fußgängerzone fährt, in der keine Oberleitung vorhanden ist. Der Verbrennungsmotor bleibt dann natürlich abgeschaltet, der Betrieb des Elektro-Antriebsmotors und der Nebenaggregate ist durch die interne elektrische Stromversorgung vom Akkumulator über den Stromrichter sichergestellt.

## Patentansprüche

1. Antriebseinrichtung für ein Verkehrsmittel, insbesondere einen Oberleitungsbus oder ein Schienenfahrzeug,
mit einer an eine elektrische Stromversorgung (23) anschließbaren elektrischen Anschlußeinrichtung (22), die mit einem Stromrichter (21) verbunden ist,
mit einem ersten Antriebsaggregat in Form eines Elektro-Antriebsmotors (20), der an den Stromrichter (21) angeschlossen ist,
mit einem zweiten Antriebsaggregat in Form eines Verbrennungsmotors (2),
mit einem Generator (3), der einerseits mit dem Verbrennungsmotor (2) und andererseits über den Stromrichter (21) mit dem Elektro-Antriebsmotor (20) verbunden ist,
und mit mindestens einem Nebenaggregat (10, 11, 12) für das Verkehrsmittel,
dadurch gekennzeichnet,
daß der Generator (3) mechanisch ständig mit den jeweiligen Nebenaggregaten (10, 11, 12) verbunden ist, während der Verbrennungsmotor (2) in schaltbarer Weise sowohl an diese Nebenaggregate (10, 11, 12) als auch an den Generator (3) anschließbar ist, derart,
daß einerseits bei Betrieb des Elektro-Antriebsmotors (20) über die externe elektrische Stromversorgung (23) der Generator (3) vom Verbrennungsmotor (2) getrennt ist und der von der externen elektrischen Stromversorgung (23) versorgte Generator (3) als Elektromotor betrieben wird und die Nebenaggregate (10, 11, 12) antreibt,
und daß andererseits bei Betrieb des Elektro-Antriebsmotors (20) über den Verbrennungsmotor (2) der Verbrennungsmotor (2) sowohl den Generator (3) als auch die Nebenaggregate (10, 11, 12) antreibt.

2. Einrichtung nach Anspruch 1,
dadurch gekennzeichnet,
daß die schaltbare Verbindung zwischen dem Verbrennungsmotor (2) und den jeweiligen Nebenaggregaten (10, 11, 12) eine einrückbare Schaltkupplung (6) aufweist.

3. Einrichtung nach Anspruch 1 oder 2,
dadurch gekennzeichnet,
daß zwischen dem Verbrennungsmotor (2), dem Generator (3) und den jeweiligen Nebenaggregaten (10, 11, 12) ein Verteilergetriebe (1) als mechanische Verbindung vorgesehen ist.

4. Einrichtung nach einem der Ansprüche 1 bis 3,
dadurch gekennzeichnet,
daß mit dem Generator (3) und wahlweise mit dem Verbrennungsmotor (2) mehrere Nebenaggregate (10, 11, 12) gleichzeitig verbunden sind.

5. Einrichtung nach einem der Ansprüche 1 bis 4,
dadurch gekennzeichnet,
daß der Verbrennungsmotor (2) ein Dieselmotor ist.

6. Einrichtung nach einem der Ansprüche 1 bis 5,
dadurch gekennzeichnet,
daß der Generator (3) und der Elektro-Antriebsmotor (20) als Transversalflußmaschinen ausgebildet sind.

7. Einrichtung nach einem der Ansprüche 1 bis 6,
dadurch gekennzeichnet,
daß der Verbrennungsmotor (2) und der Generator (3) Bestandteile eines Notstromaggregats und/oder einer alternativen oder zusätzlichen Stromversorgung für den Elektro-Antriebsmotor (20) sind.

8. Einrichtung nach einem der Ansprüche 1 bis 7,
dadurch gekennzeichnet,
daß der Generator (3) und der Elektro-Antriebsmotor (20) über den Stromrichter (21) an eine Oberleitung oder eine Stromschiene als externe elektrische Stromversorgung (22) anschließbar sind.

9. Einrichtung nach einem der Ansprüche 1 bis 7,
dadurch gekennzeichnet,
daß der Generator (3) und der Elektro-Antriebsmotor (20) über den Stromrichter (21) an einen Akkumulator als interne elektrische Stromversorgung anschließbar sind.

10. Einrichtung nach einem der Ansprüche 1 bis 9,
dadurch gekennzeichnet,
daß die Nebenaggregate (10, 11, 12) eine Lenkhilfspumpe (10), einen Luftkompressor (11), einen Bordspannungsgenerator (12) und/oder eine Wasserpumpe aufweisen.

11. Einrichtung nach einem der Ansprüche 1 bis 10,
dadurch gekennzeichnet,
daß der Generator (3) als Anlasser für den Verbrennungsmotor (2) betreibbar ist.
